# EUROPEAN PATENT SPECIFICATION

(11) **EP 4 159 020 B1**
(45) Date of publication and mention of the grant of the patent: **28.08.2024**
(21) Application number: 22197959.4
(22) Date of filing: 27.09.2022
(51) Int. Cl.: A01D 34/00

(54) **WORK VEHICLE**
ARBEITSFAHRZEUG
VÉHICULE DE TRAVAIL

(30) Priority: 30.09.2021 JP 2021162145
(43) Date of publication of application: 05.04.2023
(73) Proprietor: Iseki & Co., Ltd., Matsuyama-shi, Ehime 799-2692 (JP)
(72) Inventor: MIYAUCHI, Mana, Ehime-ken, 791-2193 (JP)
(74) Representative: TBK

(56) References cited:
- WO-A1-2020/090039
- JP-A- 2020 022 428

## Description

### BACKGROUND OF THE INVENTION

### 1. Field of the Invention

The present invention relates to a work vehicle that autonomously travels on a field.

### 2. Description of the Related Art

In the related art, for example, a work vehicle is known that uses position information obtained from a satellite positioning system to perform agricultural work (hereinafter, simply referred to as work) while autonomously traveling on a field. For example, JP-A-2021-69341 discloses a work vehicle that autonomously travels to a predetermined discharge point and that discharges a harvest when a tank accommodating the harvest is full. JP-A-2020-22428 likewise discloses additional prior art.

However, according to the method of starting the autonomous travel to the discharge point at the timing when the tank accommodating the harvest is full like the work vehicle described in JP-A-2021-69341, a moving distance to the discharge point may become long depending on a place where the tank is full, resulting in inefficient.

### SUMMARY OF THE INVENTION

An object of the invention is to provide a work vehicle capable of solving such a problem and efficiently performing a movement to a discharge point.

In order to achieve the above object, a first aspect of the invention provides a work vehicle (A). The work vehicle (A) includes an accommodating container (WM) configured to accommodate turfgrasses mowed by a mower device (W); and a mowed turfgrass amount calculation unit configured to calculate a mowed turfgrass amount corresponding to an area of a work region (R). The work vehicle (A) is configured to calculate the number of times of discharge of the accommodated turfgrasses based on the mowed turfgrass amount and information on an accommodation amount of the accommodating container (WM), and divide the work region (R) of a field into a plurality of regions by the calculated number of times of discharge, and autonomously travel to a discharge point (Pk) each time work in divided work regions (D1, D2, ...) is completed.

According to the first aspect of the invention, the work region of the field is divided into a plurality of regions, and the autonomous travel to the discharge point is performed each time the work in the divided work region is completed. Accordingly, a movement to the discharge point can be efficiently performed.

A second aspect of the invention is directed to the first aspect of the invention, in which the work vehicle (A) is configured to increase or decrease a range of the divided work regions (D1, D2, ...) such that an end of a final straight travel route (Le) of any of the divided work regions (D1, D2, ...) approaches the discharge point (Pk).

According to the second aspect of the invention, in addition to the effect according to the first aspect of the invention, it is possible to smoothly move to the discharge point by increasing or decreasing the range of the divided work region.

Further according to the first aspect of the invention, in which when an end of a final straight travel route (Le) of any of the divided work regions (D1, D2, ...) and the discharge point (Pk) are on opposite sides with respect to the work region (R), the work vehicle (A) increases or decreases the number of straight travel routes (11) such that the end of the final straight travel route (Le) and the discharge point (Pk) are on the same side with respect to the work region (R).

According to the second aspect of the invention, when the end of the final straight travel route and the discharge point are on opposite sides with respect to the work region, the number of straight travel routes is increased or decreased such that the end of the final straight travel route and the discharge point are on the same side with respect to the work region, whereby a discharge route can be shortened and efficiency can be improved.

A third aspect of the invention is directed to the second aspect of the invention, in which the work vehicle (A) is configured to increase or decrease the number of straight travel routes (11) such that the range of any of the divided work regions (D1, D2, ...) is within a range in which the mowed turfgrass amount does not exceed the accommodation amount of the accommodating container (WM).

According to the third aspect of the invention, in addition to the effect according to the second aspect of the invention, the accommodating container can be prevented from being full during work in any work region, and thus the work can be performed smoothly.

A fourth aspect of the invention is directed to any one of the second to third aspects of the inventions, in which when the range of any of the divided work regions (D1, D2, ...) is increased and the mowed turfgrass amount in the increased work region exceeds the accommodation amount of the accommodating container (WM), the work vehicle (A) increases the number of work regions (D1, D2, ...) to be divided.

According to the fourth aspect of the invention, in addition to the effect according to any one of the second to third aspects of the inventions, the accommodating container can be prevented from being full during work in any work region, and thus the work can be performed smoothly.

According to the invention, a work vehicle capable of efficiently performing a movement to a discharge point can be provided.

### BRIEF DESCRIPTION OF THE DRAWINGS

FIG. 1 is a left side view of a work vehicle according to an embodiment of the invention;
FIG. 2 is a block diagram illustrating a configuration of a control device of the work vehicle in FIG. 1;
FIG. 3 is a flowchart illustrating processing related to discharge route determination executed by a discharge route planning unit c105;
FIG. 4 is an explanatory diagram illustrating a planned travel route of the work vehicle;
FIG. 5 is an explanatory diagram illustrating calculation of a mowed turfgrass amount;
FIG. 6 is an explanatory diagram illustrating division of a work region;
FIG. 7 is an explanatory diagram illustrating correction of divided work regions; and
FIG. 8 is an explanatory diagram illustrating an increase in the number of divided work regions.

### DESCRIPTION OF THE PREFERRED EMBODIMENTS

Hereinafter, a preferred embodiment of the invention will be described with reference to the drawings. In the following description, unless otherwise specified, a forward direction of a work vehicle is defined as front, an opposite direction is defined as rear, and facing forward, a right side is defined as right and a left side is defined as left.

### 1. Configuration of Work Vehicle

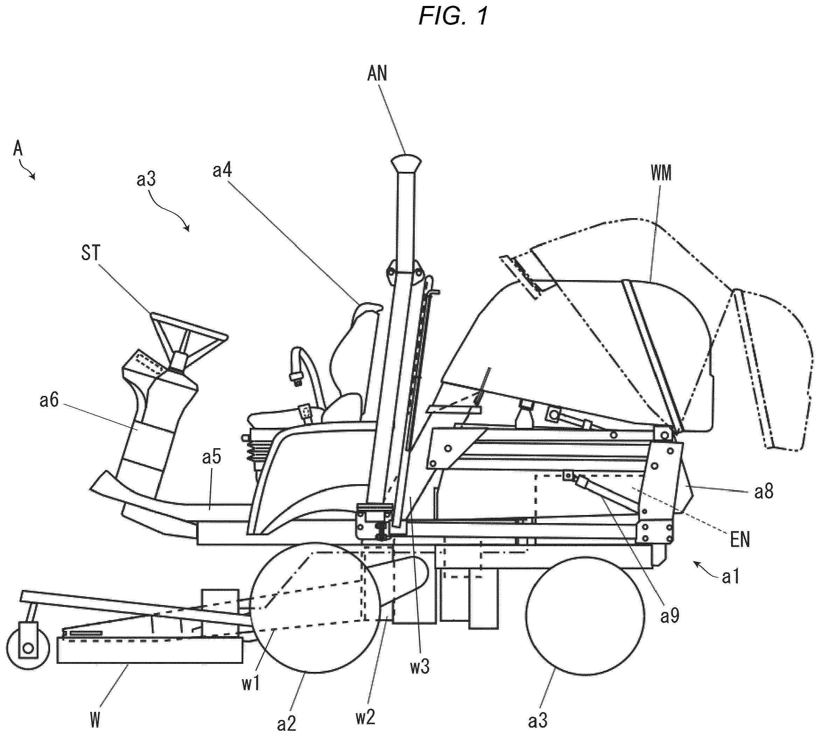

FIG. 1 is a left side view of a work vehicle according to the embodiment of the invention.

A work vehicle A has a configuration of a riding lawn mower in which a work machine W serving as a working unit is mounted to a front portion of a traveling vehicle body a1 including an autonomous traveling unit, and in which the work machine W is a mower device. However, the traveling vehicle body a1 and the work machine W are not necessarily limited to the configuration of the riding lawn mower.

As illustrated in FIG. 1, the riding lawn mower A according to the embodiment of the invention includes, as pairs of left and right traveling wheels, a pair of left and right front wheels a2 on the front portion of the traveling vehicle body a1 and a pair of left and right rear wheels a3 on a rear portion of the traveling vehicle body a1.

Behind a driver seat a4 on the traveling vehicle body a1 and above a bonnet a8 covering an engine room, a collector WM, which is an accommodating container accommodating turfgrasses or the like (hereinafter, referred to as turfgrasses) mowed by the mower device W, is vertically movably mounted via a lifting arm a9 as illustrated in FIG. 1.

### 2. Control Device of Work Vehicle

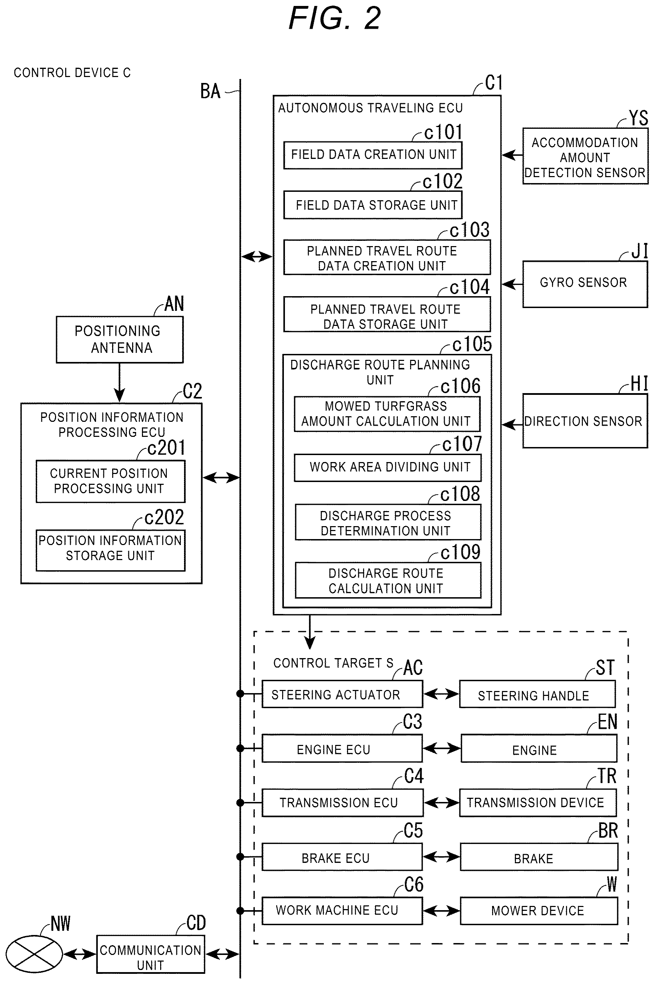

FIG. 2 is a block diagram illustrating a configuration of a control device C of the work vehicle A in FIG. 1. The work vehicle A is implemented such that operations related to work are controlled by the control device C.

As illustrated in FIG. 2, the control device C of the work vehicle A includes a plurality of electronic control units (ECUs), and the ECUs are capable of transmitting and receiving information to and from each other via a communication bus BA. The control device C includes an autonomous traveling ECU (C1) that controls traveling and the like of the harvest vehicle A, a position information processing ECU (C2) that processes position information and the like, an engine ECU (C3) that controls an engine EN, a transmission ECU (C4) that controls a transmission device TR, a brake ECU (C5) that controls a brake BR, a work machine ECU (C6) that controls operations such as driving and stopping of the work machine W, and a communication unit CD that is connected to a network NW and that is capable of transmitting and receiving information to and from an external device.

Each ECU includes a CPU that executes arithmetic processing and a memory from and to which information necessary for the arithmetic processing can be read and written, and various functions illustrated in the blocks of each ECU are implemented by the CPU operating according to various control programs stored in the memory.

The network NW is constructed by, for example, a wide area network (WAN) such as the Internet, a dedicated communication network, and a virtual private network (VPN).

The position information processing ECU (C2) includes a current position processing unit c201 and a position information storage unit c202, and is connected to a positioning antenna AN.

The current position processing unit c201 acquires reception information of the positioning antenna AN at predetermined time intervals (for example, every second), calculates a current position of the harvest vehicle A, and creates current position information DAP indicating the current position of the harvest vehicle A. The current position information DAP includes position information such as the latitude and longitude and time information measured by the positioning antenna AN. Then, the created current position information DAP is stored as temporal data in the position information storage unit c202.

The position information storage unit c202 includes a storage device such as a hard disk drive (HDD) or a flash memory in order to be able to store various types of information.

The communication unit CD is a communication unit capable of transmitting and receiving various types of information to and from a transport vehicle T and an information terminal B by wireless communication, and is connectable to the network NW having, for example, a communication function using a wireless LAN.

The autonomous traveling ECU (C1) is connected to an accommodation amount detection sensor YS that detects an accommodation amount of the collector WM, a gyro sensor JI, a direction sensor HI, and a remaining fuel sensor CS2 to be able to acquire various types of information, and can transmit control commands to a control target S including the engine ECU (C3), the transmission ECU (C4), the brake ECU (C5), and the work machine ECU (C6).

Further, the autonomous traveling ECU includes a field data creation unit c101 that creates field data, a field data storage unit c102 that stores the field data, a planned travel route data creation unit c103 that creates planned travel route data, a planned travel route data storage unit c104 that stores the planned travel route data, and a discharge route planning unit c105 that plans and determines a route (hereinafter, referred to as a discharge route) for discharging the turfgrasses in the collector to a predetermined discharge point, and further includes an autonomous traveling control unit c110 that controls mechanisms related to the autonomous travel and agricultural work.

The accommodation amount detection sensor YS is provided at an appropriate position in the collector WM, and is capable of detecting the ratio (%) of a current accommodation amount to the accommodation amount of the collector WM.

The gyro sensor JI detects an inclination (pitch) in a machine body front-rear direction, an inclination (roll) in a machine body left-right direction, and an angular speed of turning (yaw) of the work vehicle A, and the direction sensor HI detects a traveling direction of the harvest vehicle A. The gyro sensor JI and the direction sensor HI are provided at appropriate positions on the harvest vehicle A.

The field data creation unit c101 has a function of creating field data indicating a shape of a field, and includes a predetermined program or the like for creating the field data. The field data creation unit c101 is capable of grasping position information of an inner circumference of the field based on current position information when the harvest vehicle A goes around the inner circumference of the field by an operation of an operator, and creating field data indicating the shape of the field. The field data includes shape information and position information such as the latitude and longitude of the field. The created field data is stored in the field data storage unit c102.

The planned travel route data creation unit c103 calculates a planned travel route L of the harvest vehicle based on field data DH stored in the field data storage unit c102, and creates the planned travel route data indicating the planned travel route L. The created planned travel route data is stored in the planned travel route data storage unit c104. The autonomous traveling ECU (C1) of the work vehicle A causes the work vehicle A to autonomously travel along the planned travel route L during work with the exception of travel on the discharge route, with reference to the planned travel route data stored in the planned travel route data storage unit c104 during work.

### 3. Configuration of Discharge Route Planning Unit

The discharge route planning unit c105 includes a mowed turfgrass amount calculation unit c106 that calculates, according to an area of a work region, a mowed turfgrass amount which is a predicted amount of turfgrasses to be mowed; a work area dividing unit c107 that divides the work region; a discharge process determination unit c108 that determines a discharge process from a process end to the discharge point; and a discharge route calculation unit c109 that calculates the discharge route.

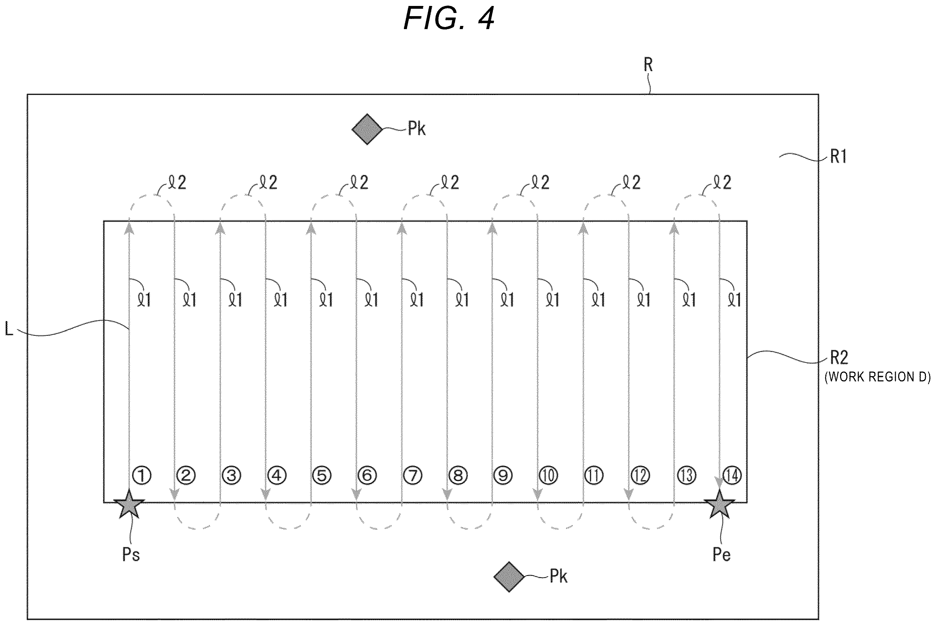

Here, the planned travel route L will be described with reference to FIG. 4. FIG. 4 is an explanatory diagram illustrating the planned travel route L of the work vehicle A. The planned travel route data creation unit c103 acquires information on a work region R, field information, and information on a work width W, and calculates the planned travel route L in the defined work region R. Here, regarding the calculation of the planned travel route L, the work region is divided into a turning travel region R1 in which the work is performed by traveling in a circular shape in the field, and a straight travel region R2 in which the work is performed by traveling straight, and a plurality of straight travel routes 11 through which the work vehicle travels straight in the straight travel region R2 are designed based on a preset work width, and the planned travel route L from a work start point Ps to a work end point Pe is created. The field data includes position information of the discharge point Pk.

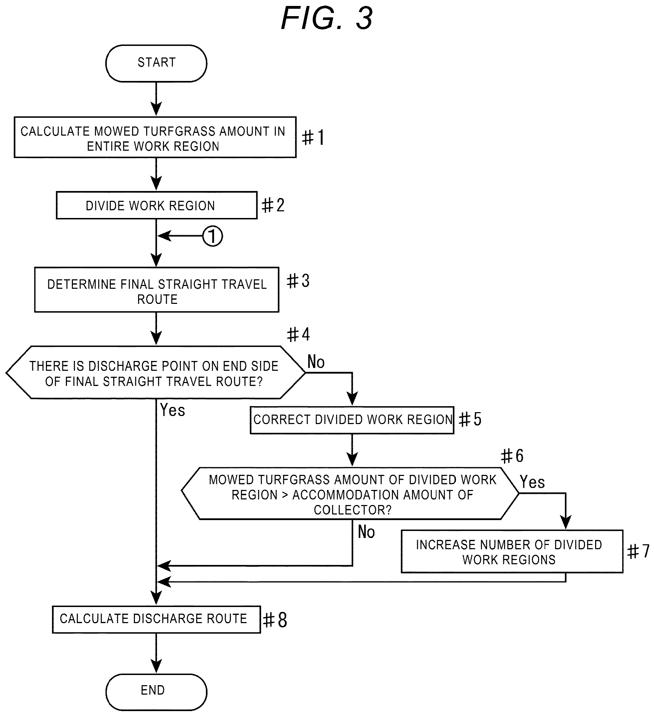

FIG. 3 is a flowchart illustrating processing related to discharge route determination executed by the discharge route planning unit c105. As illustrated in FIG. 3, in the discharge route planning unit c105, the mowed turfgrass amount calculation unit c106 calculates the mowed turfgrass amount in the entire work region R of the field based on the field data before starting work (#1).

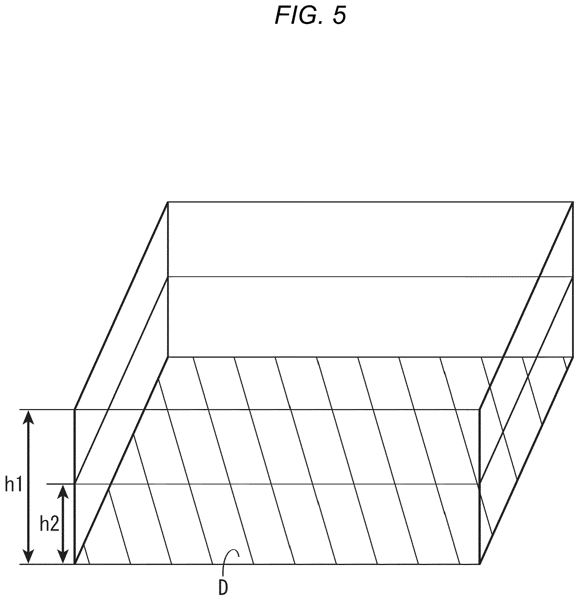

FIG. 5 is an explanatory diagram illustrating the calculation of the mowed turfgrass amount.

The mowed turfgrass amount is obtained according to the following Formula 1. Mowed turfgrass amount = area D of work region × (turfgrass height h1 - mowing height h2)

Here, the turfgrass height is a height of the turfgrass before being mowed, the mowing height is a height of the turfgrass after being mowed, and these hights are set in advance by an input or the like.

Returning to FIG. 3, when the mowed turfgrass amount is calculated, the number of times of discharge is calculated by dividing the calculated mowed turfgrass amount by the accommodation amount of the collector. Accordingly, the number of times of discharge (the number of times of going to the discharge point Pk after deviating from the planned travel route L during work) is calculated.

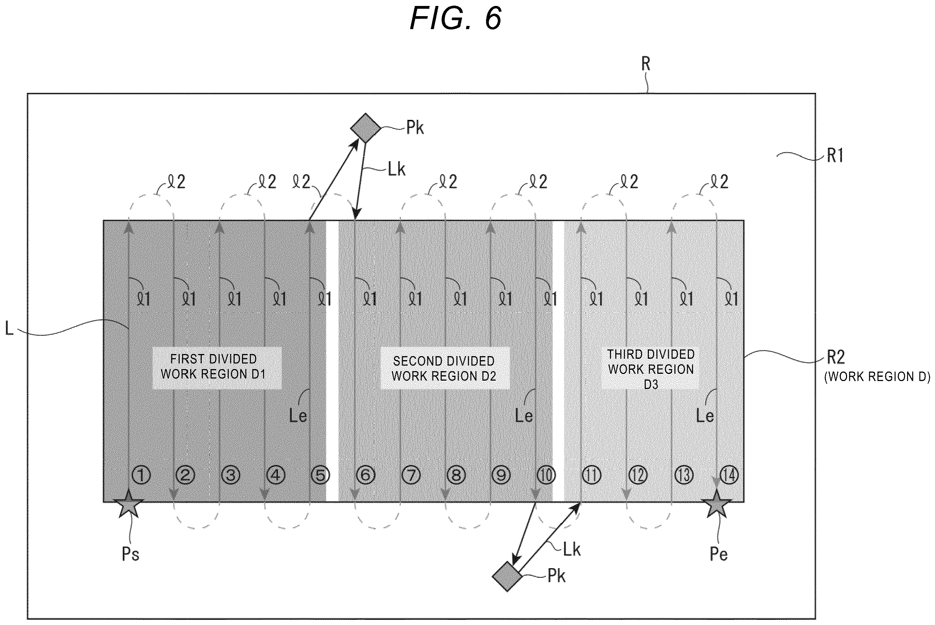

Next, the work region R is divided by the work area dividing unit c107. In the example in FIG. 6, the number of times of discharge of two is calculated, and the work region R2 is divided into three equal parts into a first divided work region D1, a second divided work region, and a third divided work region (#2).

Next, as illustrated in FIG. 6, the discharge process determination unit c108 calculates a discharge route Lk which is from an end of a final process (a final straight travel route Le) of each of the work regions D1 to D3 towards the discharge point Pk and further towards a start point of a next work region, and whether there is a discharge point on an end side of the final straight travel route Le is checked (#4). If there is a discharge point on an end side of the final straight travel route Le, there is no particular problem, and the discharge route calculation unit c109 calculates and determines the discharge route (#8).

When there is no discharge point Pk on the end side of the final straight travel route Le, a travel distance increases, and thus the work area dividing unit c107 corrects the divided work regions D1 to D3.

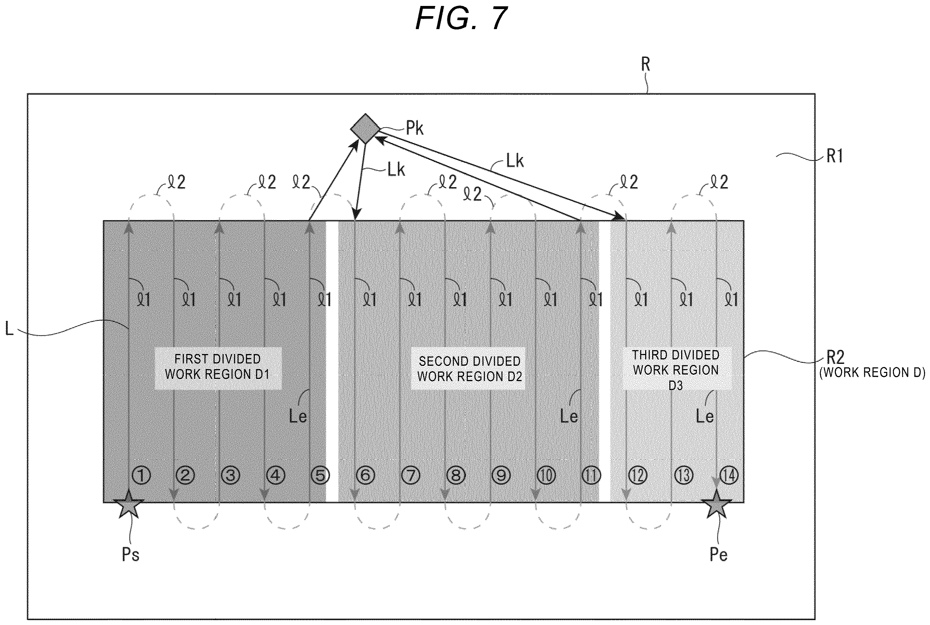

Specifically, as illustrated in FIG. 7, the number of straight travel routes 11 in the second divided work region D2 is increased by one from the state illustrated in FIG. 6, whereby the end of the final process (the final straight travel route Le) of each of the work regions D1 to D3 is in the vicinity of the discharge point Pk, and efficiency can be improved by efficiently performing a movement to the discharge point Pk.

At this time, the discharge route calculation unit c109 calculates a mowed turfgrass amount in the second divided work region D2 in which the number of straight travel routes 11 is increased by one, and determines whether the mowed turfgrass amount exceeds the accommodation amount of the collector (#6).

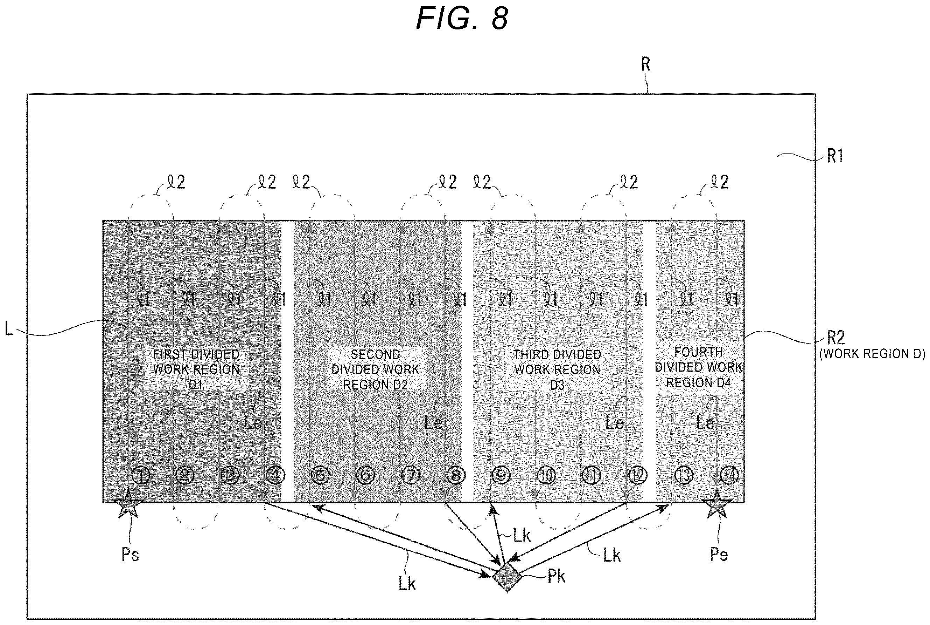

If the mowed turfgrass amount exceeds the accommodation amount of the collector, it is expected that the mowed turfgrass amount exceeds the accommodation amount of the collector during the work in the second divided work region D2. Therefore, as illustrated in FIG. 8, after adding one divided work region and creating a fourth divided work region D4, the discharge route calculation unit c109 calculates the discharge route (#7, #8). Accordingly, the movement to the discharge point Pk can be efficiently performed by setting the end of the final process (the final straight travel route Le) in the vicinity of the discharge point Pk while preventing the mowed turfgrass amount from exceeding the accommodation amount of the collector.

When the numbers of straight travel routes 11 belonging to the divided work regions D are odd numbers and work start points are on the same side with respect to the work region, the discharge process can be simplified by increasing or decreasing the straight travel routes 11 and setting the numbers of straight travel routes 11 belonging to the divided work regions D to even numbers.

Similarly, when the numbers of straight travel routes 11 belonging to the divided work regions D are even numbers and work start points are on opposite sides with respect to the work region, the discharge process can be simplified by increasing or decreasing the straight travel route 11 and setting the numbers of straight travel routes 11 belonging to the divided work regions D to odd numbers.

To provide a work vehicle capable of efficiently performing a movement to a discharge point. The above object is achieved by a work vehicle A including: an accommodating container WM configured to accommodate turfgrasses mowed by a mower device W; and a mowed turfgrass amount calculation unit configured to calculate a mowed turfgrass amount corresponding to an area of a work region R. The work vehicle A is configured to calculate the number of times of discharge of the accommodated turfgrasses based on the mowed turfgrass amount and information on an accommodation amount of the accommodating container WM, and divide the work region R of a field into a plurality of regions by the calculated number of times of discharge, and autonomously travel to a discharge point Pk each time work in divided work regions D1, D2, ... is completed.

## Claims

1. A work vehicle (A) comprising:
an accommodating container (WM) configured to accommodate turfgrasses mowed by a mower device (W); and
a mowed turfgrass amount calculation unit configured to calculate a mowed turfgrass amount corresponding to an area of a work region (R), wherein
the work vehicle (A) is configured to
calculate the number of times of discharge of the accommodated turfgrasses based on the mowed turfgrass amount and information on an accommodation amount of the accommodating container (WM), and
divide the work region (R) of a field into a plurality of regions by the calculated number of times of discharge, and autonomously travel to a discharge point (Pk) each time work in divided work regions (D1, D2, ...) is completed, and wherein
when an end of a final straight travel route (Le) of any of the divided work regions (D1, D2, ...) and the discharge point (Pk) are on opposite sides with respect to the work region (R), the work vehicle (A) increases or decreases the number of straight travel routes (11) such that the end of the final straight travel route (Le) and the discharge point (Pk) are on the same side with respect to the work region (R).

2. The work vehicle according to claim 1, wherein
the work vehicle (A) is configured to increase or decrease a range of the divided work regions (D1, D2, ...) such that an end of a final straight travel route (Le) of any of the divided work regions (D1, D2, ...) approaches the discharge point (Pk).

3. The work vehicle according to claim 1 or 2, wherein
the work vehicle (A) is configured to increase or decrease the number of straight travel routes (11) such that the range of any of the divided work regions (D1, D2, ...) is within a range in which the mowed turfgrass amount does not exceed the accommodation amount of the accommodating container (WM).

4. The work vehicle according to any one of claims 1 to 3, wherein when the range of any of the divided work regions (D1, D2, ...) is increased and the mowed turfgrass amount in the increased work region exceeds the accommodation amount of the accommodating container (WM), the work vehicle (A) increases the number of work regions (D1, D2, ...) to be divided.

## Patentansprüche

1. Ein Arbeitsfahrzeug (A) mit:
einem Aufnahmebehälter (WM), der eingerichtet ist, um von einer Mähvorrichtung (W) gemähte Rasengräser aufzunehmen; und
einer Einheit zur Berechnung der Menge an gemähtem Rasengras, die eingerichtet ist, um eine Menge an gemähtem Rasengras zu berechnen, die einer Fläche einer Arbeitszone (R) entspricht, wobei
das Arbeitsfahrzeug (A) eingerichtet ist, um
die Anzahl der Entladungen der aufgenommenen Rasengräser auf der Grundlage der gemähten Rasengrasmenge und Informationen über eine Aufnahmemenge des Aufnahmebehälters (WM) zu berechnen, und
die Arbeitszone (R) eines Feldes in eine Mehrzahl von Zonen durch die berechnete Anzahl von Entladevorgängen aufzuteilen und jedes Mal, wenn die Arbeit in aufgeteilten Arbeitszonen (D1, D2, ...) abgeschlossen ist, autonom zu einem Entladepunkt (Pk) zu fahren, und wobei
wenn ein Ende einer abschließenden geraden Fahrtroute (Le) von einem der aufgeteilten Arbeitszonen (D1, D2, ...) und der Entladepunkt (Pk) in Bezug auf die Arbeitszone (R) auf gegenüberliegenden Seiten liegen, das Arbeitsfahrzeug (A) die Anzahl der geraden Fahrtrouten (I1) so vergrößert oder verkleinert, dass das Ende der abschließenden geraden Fahrtroute (Le) und der Entladepunkt (Pk) in Bezug auf die Arbeitszone (R) auf derselben Seite liegen.

2. Das Arbeitsfahrzeug nach Anspruch 1, wobei
das Arbeitsfahrzeug (A) eingerichtet ist, um einen Bereich der aufgeteilten Arbeitszonen (D1, D2, ...) zu so vergrößern oder zu verkleinern, dass ein Ende einer letzten geraden Fahrtroute (Le) von einem der aufgeteilten Arbeitszonen (D1, D2, ...) sich dem Entladepunkt (Pk) nähert.

3. Das Arbeitsfahrzeug nach Anspruch 1 oder 2, wobei
das Arbeitsfahrzeug (A) eingerichtet ist, um die Anzahl der geraden Fahrstrecken (I1) so zu vergrößern oder zu verkleinern, dass der Bereich jedes der aufgeteilten Arbeitszonen (D1, D2, ...) innerhalb eines Bereichs liegt, in dem die Menge des gemähten Rasengrases die Aufnahmemenge des Aufnahmebehälters (WM) nicht übersteigt.

4. Das Arbeitsfahrzeug nach einem der Ansprüche 1 bis 3, wobei
das Arbeitsfahrzeug (A) die Anzahl der aufzuteilenden Arbeitszone (D1, D2, ...) vergrößert, wenn der Bereich eines der aufgeteilten Arbeitszonen (D1, D2, ...) vergrößert wird und die gemähte Rasenmenge in der vergrößerten Arbeitszone die Aufnahmemenge des Aufnahmebehälters (WM) überschreitet.

## Revendications

1. Véhicule de travail (A) comprenant :
un récipient de contenu (WM) configuré pour contenir de gazon tondu par une tondeuse (W) ; et
une unité de calcul de la quantité de gazon tondu configurée pour calculer une quantité de gazon tondu correspondant à une surface d'une région de travail (R), dans lequel
le véhicule de travail (A) est configuré pour
calculer le nombre de fois de décharge de gazon contenu en fonction de la quantité de gazon tondu et des informations sur la quantité de contenu dans le récipient de contenu (WM), et
diviser la région de travail (R) d'un champ en plusieurs régions en fonction du nombre de fois de décharge calculé, et se rendre de manière autonome à un point de décharge (Pk) chaque fois que le travail dans des régions de travail divisées (D1, D2, ...) est complété, et dans lequel
lorsqu'une extrémité d'un itinéraire de déplacement final en ligne droite (Le) de l'une des régions de travail divisées (D1, D2, ...) et le point de décharge (Pk) sont situés sur des côtés opposés par rapport à la région de travail (R), le véhicule de travail (A) augmente ou diminue le nombre d'itinéraires de déplacement en ligne droite (11) de sorte que l'extrémité du itinéraire de déplacement final en ligne droite (Le) et le point de décharge (Pk) soient situés du même côté par rapport à la région de travail (R).

2. Véhicule de travail selon la revendication 1, dans lequel
le véhicule de travail (A) est configuré pour augmenter ou diminuer une portée de régions de travail divisées (D1, D2, ...) de telle sorte qu'une extrémité d'un itinéraire de déplacement final en ligne droite (Le) de l'une quelconque des régions de travail divisées (D1, D2, ...) s'approche du point de décharge (Pk).

3. Véhicule de travail selon la revendication 1 ou 2, dans lequel
le véhicule de travail (A) est configuré pour augmenter ou diminuer le nombre d'itinéraires de déplacement en ligne droite (11) de sorte que la portée de l'une quelconque des régions de travail divisées (D1, D2, ...) se situe dans une portée dans laquelle la quantité de gazon tondu ne dépasse pas la quantité de contenu du récipient de contenu (WM).

4. Véhicule de travail selon l'une quelconque des revendications 1 à 3, dans lequel
lorsque la portée de l'une quelconque des régions de travail divisées (D1, D2, ...) est augmentée et la quantité de gazon tondu dans la région de travail augmentée dépasse la quantité de contenu du récipient de contenu (WM), le véhicule de travail (A) augmente le nombre de régions de travail (D1, D2, ...) à diviser.
